(19) 

(11) **EP 4 668 292 B1**

(12) **EUROPEAN PATENT SPECIFICATION**

(45) Date of publication and mention of the grant of the patent:
**23.09.2026 Bulletin 2026/39**

(21) Application number: **24183490.2**

(22) Date of filing: **20.06.2024**

(51) International Patent Classification (IPC):
***C08K 3/22*** *(2006.01)* ***C08K 3/32*** *(2006.01)*
***C08L 23/0892*** *(2025.01)*

(52) Cooperative Patent Classification (CPC):
(C-Sets available)
**H01B 7/295; C08L 23/0892;** C08K 2003/2217; C08K 2003/328 (Cont.)

(54) **ZIRCONIUM PHOSPHATE AS FLAME RETARDANCY BOOSTER FOR MDH FILLED SILANE CROSSLINKED SYSTEMS**

ZIRKONIUMPHOSPHAT ALS FLAMMHEMMUNGSVERSTÄRKER FÜR MDH-GEFÜLLTE SILANVERNETZTE SYSTEME

PHOSPHATE DE ZIRCONIUM EN TANT QU’AGENT D’INTENSIFICATION DE L’ININFLAMMABILITÉ POUR SYSTÈMES RÉTICULÉS PAR SILANE CHARGÉS DE MDH

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**24.12.2025 Bulletin 2025/52**

(73) Proprietor: **Borealis GmbH**
**1020 Vienna (AT)**

(72) Inventors:
- **GSCHNEIDTNER, Tina**
  **44486 Stenungsund (SE)**
- **THUNBERG, Johannes**
  **44486 Stenungsund (SE)**
- **CHOI, Eun Ho**
  **Cheonan (KR)**
- **YUN, Jun Hyeong**
  **Cheonan (KR)**

(74) Representative: **Kador & Partner Part mbB**
**Corneliusstraße 15**
**80469 München (DE)**

(56) References cited:
**US-B1- 6 197 864**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 3/22, C08L 23/0892;**
**C08K 3/32, C08L 23/0892;**
**C08L 23/0892, C08L 51/06, C08K 3/22, C08K 3/32, C08K 5/54**

## Description

### Field of the invention

The present invention relates to a flame-retardant polymer composition comprising a cross-linkable olefin copolymer containing hydrolysable silane groups, magnesium hydroxide, and zirconium phosphate. The present invention further relates to a process for producing said polymer composition and an article, preferably a wire or cable, comprising said polymer composition. Moreover, the present invention relates to the use of zirconium phosphate in a polymer composition comprising magnesium hydroxide to improve flame-retardancy.

### Background

A wide variety of polymeric materials have been utilized as electrical insulating and semiconducting shield materials for power cables. Such polymeric materials in addition to having suitable dielectric properties must also be enduring and must substantially retain their initial properties for effective and safe performance over many years of service. Such materials must further meet stringent safety requirements as laid down in international standards. In particular, a single cable, or bundle of cables, must not burn by itself or transmit fire; the combustion gases of a cable must be as harmless as possible to humans, the smoke and combustion gases formed must not obscure escape routes or be corrosive.

In the USA, flame retardant insulation cables, thermoplastic and crosslinked cables must meet UL requirements with focus on flame retardant, mechanical and wet electrical properties, as described e.g. in UL2556.

Flame retardants are chemicals used in polymers that inhibit or resist the spread of fire. For improving the flame retardancy of polymer compositions to be used in wires or cables, compounds containing halides were first added to the polymer. However, these compounds have the disadvantage that upon burning, hazardous and corrosive gases like hydrogen halides are liberated.

One approach to achieve high flame retardant properties in halogen-free polymer compositions consists in the addition of high amounts, typically 50.0 to 60.0 wt.%, of inorganic fillers. Such fillers, which include aluminium hydroxide (ATH) and magnesium hydroxide (MDH) decompose endothermically at temperatures between 200 and 600°C, liberating inert gases. However, the use of such high filler loadings leads to the deterioration of processability and mechanical properties of the polymer compositions.

WO 2018/160457 A1 discloses flame retardant silane crosslinked polymer compositions comprising MDH in combination with antimony trioxide as a booster. It has been shown that the filler (viz. MDH) loading can be reduced, when 10-20 wt.% antimony trioxide are added. As expected, an improvement of the mechanical properties was observed. However, as already indicated above, the use of antimony trioxide (CAS 1327-33-9) as a booster in flame retardant compositions should best be avoided since it is toxic to aquatic life, harmful if swallowed or inhaled and suspected of causing cancer.

WO 2023/062062 A1 discloses a thermoplastic, flame retardant polymer composition comprising ATH in combination with zirconium phosphate. It has been shown that said combination of ATH and zirconium phosphate results in improved flame retardant properties. US 6 197 864 B1 discloses flame retardant compositions for cables comprising olefin-alkoxy silane copolymer and magnesium hydroxide.

As already indicated above, the addition of flame retardant fillers in polymer compositions for wire and cable applications has some drawbacks. Since flame retardant loadings are usually high, around 25.0 wt.% for intumescent flame retardant fillers, and 50.0 to 65.0 wt.% for mineral flame retardant fillers like aluminum hydroxide (ATH) or magnesium hydroxide (MDH), several cable related properties are negatively affected. Flame retardant cable insulation needs a combination of mechanical, flame retardant and electrical properties, which are typically challenging to meet in combination. Especially demanding applications are the American UL44 and UL2556:2021 standards for cables. Typically, only halogen-based materials pass these requirements, as halogen free flame retardant (HFFR) materials need a loading of at least 60.0 wt.% of mineral filler to pass flame retardant demands, but that in turn affects the wet ageing properties negatively. The main cause for the poor electrical performance during wet ageing is a high degree of water absorption in mineral filled materials, where water increases the conductivity of the insulation, hence increasing the risk of overheating and short circuits in the cable.

Additionally in case of wire and cables, flame retardant systems cannot be too hygroscopic, as electrical, mechanical and flame-retardant properties can change when the materials are exposed to moisture.

In addition, wire and cables must fulfil small-scale flame-retardant properties, such as flame spread, heat release and char formation, as well as wet ageing and electrical properties.

## Object of the invention

As can be seen from the above, there is a continued interest in identifying halogen-free, non-toxic polymer compositions that meet the flame-retardant standards, while still providing excellent processability and mechanical properties.

## Summary of the invention

The present invention is based on the finding that the combination of zirconium phosphate (ZrP) with a conventional flame-retardant filler, in particular magnesium hydroxide (MDH), allows for the production of polymer compositions that simultaneously exhibit flame retardancy and good mechanical properties.

Thus, the present invention is directed to a polymer composition comprising:

(A) a cross-linkable olefin copolymer containing hydrolysable silane groups,

(B) magnesium hydroxide, and

(C) zirconium phosphate.

Further, the present invention is directed to a process for producing a polymer composition as detailed above, as well as an article, preferably a wire or cable, comprising a polymer composition as detailed above or obtained by a process as described herein.

Moreover, in another aspect, the present invention is directed to the use of zirconium phosphate in a polymer composition comprising magnesium hydroxide to improve flame-retardancy.

## Detailed description of the invention

The polymer composition according to the present invention comprises:

(A) a cross-linkable olefin copolymer containing hydrolysable silane groups,

(B) magnesium hydroxide, and

(C) zirconium phosphate.

Preferably, the polymer composition as described herein, further comprises a second olefin homo- or copolymer (D).

Preferably, said second olefin homo- or copolymer (D) comprises a grafted polyethylene; more preferably a polyethylene grafted with a comonomer comprising a polar group and even more preferably a polyethylene grafted with maleic anhydride.

Preferably, the polymer composition as described herein is further characterized in that said cross-linkable olefin copolymer (A) comprises at least one alpha-olefin monomer, a comonomer comprising a polar group and a comonomer comprising an unsaturated silane compound; more preferably in that said comonomer comprising a polar group is selected from acrylate and methacrylate comonomers; and even more preferably in that said cross-linkable olefin copolymer (A) comprises a copolymer of ethylene, methyl acrylate and vinyltrimethoxysilane.

Preferably, said cross-linkable olefin copolymer (A) is a non-grafted copolymer.

Preferably, the polymer composition as described herein further comprises a hydrolysable silane compound (E).

Preferably, the polymer composition as described herein further comprises additives (F).

According to a preferred embodiment of the invention, the polymer composition comprises:

from 10.0 to 85.0 wt. %, preferably from 20.0 to 75.0 wt.%, more preferably from 20.0 to 40.0 wt.% of a cross-linkable olefin copolymer containing hydrolysable silane groups (A),

from 10.0 to 75.0 wt. %, preferably from 20.0 to 70.0 wt.%, more preferably from 40.0 to 68.0 wt.% of a metal hydroxide (B), a

from 0.1 to 15.0 wt. %, preferably from 0.2 to 10.0 wt.%, more preferably from more than 1.0 to 5.0 wt.% of zirconium phosphate;

wherein wt. % are calculated based on the total weight of the polymer composition.

Preferably, the polymer composition according to the above preferred embodiment further comprises from 0.1 to 10.0 wt.%, more preferably from 0.5 to 8.0 wt.% and even more preferably from 1.0 to 5.0 wt.% of a second olefin copolymer (D).

Preferably, the polymer composition according to the above preferred embodiment further comprises from 0.1 to 3.0 wt.%, more preferably from 0.2 to 2.0 wt.%, and even more preferably from 0.5 to 2.0 wt.% of a hydrolysable silane compound (E).

Preferably, the polymer composition according to the above preferred embodiment further comprises from 0.1 to 3.0 wt.%, more preferably from 0.2 to 2.0 wt.%, and even more preferably from 0.5 to 1.5 wt.% of additives (F).

According to a further particularly preferred embodiment of the invention, the polymer composition consists of:

(A) a cross-linkable olefin copolymer containing hydrolysable silane groups,

(B) magnesium hydroxide,

(C) zirconium phosphate,

(D) optionally, a second olefin homo- or copolymer,

(E) optionally, a hydrolysable silane compound, and

(F) optionally, additives;

wherein a total amount of additives (F) is in a range of from 0.0 to 3.0 wt.% based on the total weight of the polymer composition.

The individual components that are or may be included in the polymer composition according to the present invention are described in detail herein below.

*Cross-linkable olefin copolymer containing hydrolysable silane groups (A)*

The cross-linkable olefin copolymer containing hydrolysable silane groups (A) comprised in the polymer compositions according to the present invention may be obtained by grafting the silane compound onto the prepared polyolefin or by copolymerization of one or more olefin monomers, one or more silane group containing monomers and, optionally, one or more further comonomers. Such techniques are known e.g. from US 4,413,066, US 4,297,310, US 4,351,876, US 4,397,981, US 4,446,283 and US 4,456,704.

The cross-linkable, non-grafted copolymer containing hydrolysable silane groups (A1) is preferably obtained by copolymerizing one or more olefin monomer(s) with an unsaturated silane compound, more preferably by copolymerizing one olefin monomer with an unsaturated silane compound. The copolymerization of the one or more olefin monomer(s) with the unsaturated silane compound may be carried out under any suitable conditions resulting in the copolymerization of the monomer(s) and the unsaturated silane compound. The unsaturated silane compound is also referred to as silane group containing monomers.

The unsaturated silane compound is preferably represented by the formula (I)

$$R^1SiR^2_qY_{3-q} \qquad (I)$$

wherein

$R^1$ is an ethylenically unsaturated hydrocarbyl, hydrocarbyloxy or (meth)acryloxy hydrocarbyl group,

$R^2$ is an aliphatic saturated hydrocarbyl group,

Y which may be the same or different, is a hydrolysable organic group and

q is 0, 1 or 2.

Special examples of the unsaturated silane compound are those wherein $R^1$ is vinyl, allyl, isopropenyl, butenyl, cyclohexanyl or gamma-(meth)acryloxy propyl; Y is methoxy, ethoxy, formyloxy, acetoxy, propionyloxy or an alkyl-or arylamino group; and $R^2$, if present, is a methyl, ethyl, propyl, or decyl group.

A preferred unsaturated silane compound is represented by the formula (II)

CH2=CHSi(OA)3 (II)

wherein A is a hydrocarbyl group having 1-8 carbon atoms, preferably 1-4 carbon atoms.

The unsaturated silane compound is preferably one or more selected from the group consisting of vinyl trimethoxysilane (VTMS), vinyl bismethoxyethoxysilane, vinyl triethoxysilane, vinyl triisopropoxysilane, vinyl tri-n-butoxy silane, gamma-(meth)acryloxypropyltrimethoxysilane, gamma-(meth)acryloxypropyltriethoxysilane and vinyl triacetoxysilane. More preferably, the unsaturated silane compound is vinyl trimethoxysilane (VTMS).

The olefin monomer is one or more selected from the group consisting of ethylene, propylene or butylene, more preferably the olefin monomer is ethylene.

In preferred embodiments of the invention, the cross-linkable, non-grafted copolymer containing hydrolysable silane groups (A1) is obtained by copolymerizing ethylene with vinyl trimethoxysilane (VTMS).

The cross-linkable, non-grafted copolymer (A1) preferably contains 0.001 wt.% to 15.0 wt.% of hydrolysable silane groups, more preferably 0.01 wt.% to 5.0 wt.%, most preferably 0.1 wt. % to 2.0 wt. %.

Copolymer means that it is obtained by polymerizing at least two different monomers. For example a terpolymer, which is obtained by polymerizing three different monomers, thus also falls under the definition of copolymer.

Copolymerization may also be implemented by copolymerizing one olefin monomer as described above with an unsaturated silane compound as described above in the presence of one or more other comonomer(s), preferably in the presence of one other comonomer. Preferably, copolymerizing is carried out in the presence of one or more other comonomer(s), more preferably copolymerizing is carried out in the presence of one other comonomer. The other comonomer(s) is preferably an acrylate-group containing comonomer, more preferably the other comonomer is one or more selected from the group consisting of methyl acrylate, ethyl acrylate, butyl acrylate or mixture thereof, and most preferably the other comonomer is a methyl acrylate or a butyl acrylate.

The total comonomer content of the cross-linkable, non-grafted copolymer (A1) is preferably 0.5 wt.% to 70.0 wt.% of the copolymer, more preferably about 1.0 wt.% to 35.0 wt. %, and most preferably 5.0 wt.% to 30.0 wt. %.

The present invention further provides a cross-linkable polymer composition comprising a cross-linkable, grafted copolymer containing hydrolysable silane groups (A2). As discussed above, the hydrolysable silane group can be introduced into the polymer by grafting, i.e. by chemical modification of the polymer by addition of silane group mostly in a radial reaction. This technique is well known in the art. If using a graft copolymer, this may have been produced e.g. by any of the two methods described in US 3,646,155 and US 4,117,195, respectively.

All preferred embodiments for the cross-linkable polymer composition comprising a cross-linkable, non-grafted copolymer containing hydrolysable silane groups (A1) described above are preferred embodiments of the cross-linkable polymer composition comprising a cross-linkable, grafted copolymer containing hydrolysable silane groups (A2), if applicable.

The cross-linkable olefin copolymer containing hydrolysable silane groups (A) may be selected from non-grafted (A1) and grafted (A2) copolymers as described above.

Preferably said cross-linkable olefin copolymer containing hydrolysable silane groups (A) is present in the polymer composition according to the present invention in an amount of 10.0 to 85.0 wt.%, more preferably of 20.0 to 75.0 wt. % and even more preferably of 20.0 to 40.0 wt.%, based on the total weight of the polymer composition.

*Magnesium hydroxide (B)*

In the present invention the flame retardant filler comprises, preferably consists of, magnesium hydroxide (B).

Preferably the content of magnesium hydroxide (B) in the polymer composition of the present invention is in a range of 10.0 to 75.0 wt.%, more preferably in the range of 20.0 to 70.0 wt.% and even more preferably from 40.0 to 68.0 wt. % based on the total weight of the polymer composition.

Preferably, component (B) may comprise a ground or precipitated magnesium hydroxide or mixtures thereof.

Component (B) may more preferably comprise a ground or precipitated magnesium hydroxide having a BET surface area in the range of 1 to 20 $m^2/g$ and more preferably in the range of 5 to 12 $m^2/g$.

In accordance with the present invention a "ground magnesium hydroxide" is a magnesium hydroxide obtained by grinding minerals based on magnesium hydroxide, such as brucite and the like. Brucite is found in its pure form or, more often, in combination with other minerals such as calcite, aragonite, talc or magnesite, often in stratified form between silicate deposits, for instance in serpentine asbestos, in chlorite or in schists.

Suitable ground magnesium hydroxides which may be used as component (B) are commercially available and include, for example, Kisuma 5JL (particularly preferred), Kisuma 5P, Kisuma 5A (Kisuma) or Magnifin 5TV (Huber).

Component (B) may preferably be used in the form of particles whose surface has been treated with stearates, such as magnesium or zinc stearate; silanes or polymeric components. Component (B) may also be used without surface

treatment.

*Zirconium phosphate (C)*

In a further preferred embodiment in accordance with the present invention the content of the zirconium phosphate (C) in the polymer composition is in the range of 0.1 to 15.0 wt.%, preferably in the range of 0.2 to 10.0 wt.% and more preferably from more than 1.0 to 5.0 wt.% based on the overall weight of the polymer composition. It is to be noted that, in the context of the present invention, a content of ZrP of more than 1.0 wt.% may refer, for example, to 1.1 wt. %

The zirconium phosphate may preferably be zirconium(IV) hydrogen phosphate, $Zr(HPO_4)_2 \cdot H_2O$, CAS No.: 13772-29-7. It is supplied as a white powder and may be obtained, for example, from Sunshine, Company Resin & Zircon Technology China.

It has a relative density of 3.3 g/mL at 25 °C. However, the apparent density of the Zirconium phosphate used in compositions in accordance with the present invention may be lower, for example in a range of from 1.0 to 3.3 g/ml; preferably in a range of from 1.5 to 2.5 g/ml. Zirconium(IV) hydrogen phosphate may be used in crystalline form as $\alpha$, $\gamma$ and $\theta$ form with a layered structure and $\tau$ with a 3D structure. The structure of the crystalline form is easier to control and has exfoliation and intercalation properties. Among the crystalline structures, $\alpha$-zirconium(IV) hydrogen phosphate is particularly preferred in which zirconium(IV) atoms are connected to oxygen atoms of the phosphate groups, leading to a crosslinked network. In the same layer, atoms are connected by covalent bonds, whereas the two adjacent layers are attracted by Van der Waals forces. The P-OH groups are responsible for the medium-strong Brønsted acidity of $\alpha$-zirconium(IV) hydrogen phosphate, which allows the intercalation chemistry. It can be a flame retardant synergist due to the flexibility of the structure and its high thermal stability up to 800 °C.

*Second olefin homo- or copolymer (D)*

The polymer composition according to the present invention optionally comprises a second olefin homo- or copolymer (D), being different from the (first) cross-linkable olefin copolymer containing hydrolysable silane groups (A).

Preferably, the second olefin homo- or copolymer (D) is a copolymer of ethylene, which bears functional group containing units originating from at least one unsaturated carboxylic acid and/ or its anhydrides, metal salts, esters, amides or imides and mixtures thereof.

In the following preferred embodiments of component (D) will be discussed.

In a preferred embodiment in accordance with the present invention component (D) is a copolymer of ethylene and a $C_4$ to $C_{10}$ alpha olefin comonomer, more preferably a copolymer of ethylene and 1-octene; whereby said copolymer before introducing the functional group has a density in the range of 850 kg/m$^3$ to 950 kg/m$^3$ , preferably in the range of 860 to 940 kg/m$^3$ and more preferably in the range of 870 to 930 kg/m$^3$ measured according to ISO 1183.

Another preferred embodiment according to the present invention stipulates that component (D) has an $MFR_2$ in the range of 0.1 to 20.0 g/10 min, preferably in the range of 0.5 to 10.0 g/10 min and more preferably in the range of 0.5 to 3.0 g/10 min, measured according to ISO 1133 at 190°C and a load of 2.16 kg.

$C_4$ to $C_{10}$ alpha-olefin comonomers are for example 1-butene, 1-hexene or 1-octene. Preferably, the comonomer is 1-butene or 1-octene, more preferably the comonomer is 1-octene. The amount of comonomer is usually in the range of 20.0 wt.% to 45.0 wt. %, depending on the chosen comonomer and the desired density. Thus, suitable copolymers (D) have an ethylene content in the range from 55.0 to 80.0 wt.%, preferably from 58.0 to 78.0 wt.% and more preferably from 60.0 to 75.0 wt. %.

According to a further preferred embodiment of the present invention the copolymer of ethylene for component (D) is a copolymer of ethylene and methyl acrylate or a copolymer of ethylene and butyl acrylate.

In still another preferred embodiment according to the present invention component (D) bears functional group containing units originating from a compound selected from the group consisting of maleic anhydride, acrylic acid, methacrylic acid, crotonic acid, fumaric acid, fumaric acid anhydride, maleic acid, citraconic acid and mixtures thereof, preferably originating from maleic anhydride.

According to a further preferred embodiment of the present invention component (D) is obtained by copolymerizing and/or grafting a copolymer of ethylene with a compound selected from the group consisting of maleic anhydride, acrylic acid, methacrylic acid, crotonic acid and mixtures thereof, whereby grafting with maleic anhydride is preferred.

Grafting can be carried out by any process known in the art such as grafting in a melt without a solvent or in solution or dispersion or in a fluidised bed. Typically, grafting is performed in a heated extruder or mixer as e.g. described in US 3236917 A , US 4639495 A , US 4950541 A or US 5194509 A . Typically, grafting is carried out in a twin-screw extruder such as described in US 4950541 A. Grafting may be carried out in the presence or absence of a radical initiator but is preferably carried out in the presence of a radical initiator such as an organic peroxide, organic perester or organic hydroperoxide.

Still another preferred embodiment in accordance with the present invention stipulates that the content of the

functional group containing units originating from unsaturated carboxylic acids or carboxyl acid anhydrides in component (D) is in the range of 0.01 to 2.0 wt.%, preferably in the range of 0.02 to 1.5 wt. % and more preferably in the range of 0.20 to 1.0 wt. %.

Another preferred embodiment stipulates that component (D) is a copolymer of ethylene and 1-octene grafted with maleic anhydride, preferably the content of 1-octene is in the range of 20.0 to 45.0 wt.%, preferably in the range of 22.0 to 42.0 wt.% and more preferably in the range of 25.0 to 40.0 wt.% and still more preferably in the range of 28.0 to 32.0 wt.% based on the overall weight of the copolymer of ethylene and 1-octene and the content of maleic anhydride is in the range of 0.01 to 2.0 wt. %, preferably in the range of 0.02 to 1.5 wt.% and more preferably in the range of 0.20 to 1.0 wt.% based on the overall weight of component (D).

According to another preferred embodiment in accordance with the present invention the melting points of component (D) is in the range of 30°C to 150°C, preferably in the range of 40°C to 145°C, more preferably in a range of 50°C to 140°C and most preferably in a range of 70°C to 140°C. According to another preferred embodiment in accordance with the present invention the dispersity Mw/Mn of component (D) is most often below 4, such as 3.8 or below, but is at least 1.7. It is preferably between 3.5 and 1.8.

Suitable base copolymers, these means before introducing the functional groups, for component (D) are commercially available, i.a. from Borealis AG.

Alternatively, these base copolymers can be prepared by known processes, in a one stage or two stage polymerization process, comprising solution polymerization, slurry polymerization, gas phase polymerization or combinations therefrom, in the presence of suitable catalysts, like vanadium oxide catalysts or single-site catalysts, e.g. metallocene or constrained geometry catalysts, known to the art skilled persons. A suitable process is inter alia described in WO 2019/201934 A1.

Suitable olefin homo- or copolymers (D) including functional groups are commercially available, i.a. from Hyundai under the tradename Polyglue, from Polyram under the tradename of Bondyram, or from DOW under the tradename Fusabond.

Particularly preferred examples of suitable olefin homo- or copolymers (D) include Polyglue GE270C from Hyundai and Fusabond 226 from DOW.

In a further preferred embodiment in accordance with the present invention the content of component (D) in the polymer composition is in the range of 0.1 to 10.0 wt. %, preferably in the range of 0.5 to 8.0 wt.% and more preferably from 1.0 to 5.0 wt.% based on the overall weight of the polymer composition.

*Hydrolysable silane compound (E)*

When the flame-retardant polymer composition of the present invention is crosslinked, it may comprise a hydrolysable silane compound (E) as described in EP 0 449 939 A1. If applicable, the hydrolysable silane compound may be present in the composition in an amount of 0.1 to 3.0 wt.%, preferably in the range of 0.2 to 2.0 wt. % and more preferably from 0.5 to 2.0 wt. % based on the overall weight of the polymer composition.

According to a particularly preferred embodiment of the present invention, compound (E) comprises hexadecyltrimethoxysilane (HDTMS).

*Additives (F)*

The polymer composition according to the present invention may also comprise additives.

Preferably, the flame-retardant polymer composition of the invention comprises at least one additive preferably selected from the group consisting of slip agents, UV-stabiliser, antioxidants, additive carriers, nucleating agents and mixtures thereof.

The flame-retardant polymer composition of the invention may preferably comprise an antioxidant comprising a sterically hindered phenol group or aliphatic sulphur groups. Such compounds are disclosed in EP 1 254 923 A1 as particularly suitable antioxidants for stabilisation of polyolefin containing hydrolysable silane groups. Other preferred antioxidants are disclosed in WO 2005/003199 A1. Preferably, the antioxidant is present in the composition in an amount of from 0.01 to 3.0 wt.%, more preferably 0.05 to 2.0 wt.%, and most preferably 0.08 to 1.5 wt.%, based on the overall weight of the polymer composition.

According to a preferred embodiment of the present invention the total content of additives (F) in the polymer composition is in a range of 0.1 to 3.0 wt. %, preferably in the range of 0.2 to 2.0 wt.% and more preferably from 0.5 to 1.5 wt.% based on the overall weight of the polymer composition.

Moreover, according to a particularly preferred embodiment of the present invention, the additives (F) comprised in the composition comprise at least one antioxidant (for example, Irganox 1010 from BASF) at least one light stabilizer (for example, Tinuvin 783 from BASF) and at least one metal deactivator (for example, Irganox 2024 from BASF).

*Composition and Properties*

The polymer composition according to the present invention is characterized in that it is preferably free of any halogens and/ or halogenated (organic) compounds; in particular the polymer composition is preferably free of chloric acid derivatives or organobromines such as decabromodiphenyl. Further, the polymer composition according to the present invention is preferably free of toxic components such as antimony trioxide.

The polymer composition according to the present invention is further characterized in that it has:

- a tensile strength, determined as detailed in the experimental section herein below, of 10 MPa or more, preferably of more than 10.1 MPa; and/ or
- an elongation at break, determined as detailed in the experimental section herein below, of 100 % or more, preferably of 130 % or more.

Even though upper limits for tensile strength and elongation at break are not necessarily defined, it may be assumed that the polymer composition according to the present invention preferably has a tensile strength in a range of from 10 MPa to 25 MPa and an elongation at break in a range of from 100 % to 500 %.

The polymer composition according to the present invention may be cross-linked by any cross-linking method that is usually applied in the field of silane-cross-linkable/ cross-linked polymer compositions.

According to a preferred embodiment of the present invention, the polymer composition comprises, more preferably consists of:

- a cross-linkable olefin copolymer containing hydrolysable silane groups (A);
- a metal hydroxide (B);
- zirconium phosphate (C);
- a second olefin copolymer (D);
- a hydrolysable silane compound (E); and
- additives (F).

According to a more preferred embodiment of the present invention, the polymer composition comprises:

- from 20.0 to 40.0 wt.% of a cross-linkable olefin copolymer containing hydrolysable silane groups (A);
- from 20.0 to 70.0 wt.% of a metal hydroxide (B);
- from 0.2 to 5.0 wt.% of zirconium phosphate (C);
- from 1.0 to 5.0 wt.% of a second olefin copolymer (D);
- from 0.5 to 2.0 wt.% of a hydrolysable silane compound (E); and
- from 0.5 to 1.5 wt.% of additives (F).

Further, according to an even more preferred embodiment of the present invention, the polymer composition comprises:

- from 20.0 to 40.0 wt.% of a cross-linkable olefin copolymer containing hydrolysable silane groups (A);
- from 40.0 to 68.0 wt.% of a metal hydroxide (B);
- from more than 1.0 to 5.0 wt.% of zirconium phosphate (C);
- from 1.0 to 5.0 wt.% of a second olefin copolymer (D);

- from 0.5 to 2.0 wt.% of a hydrolysable silane compound (E); and
- from 0.5 to 1.5 wt.% of additives (F).

*Process*

The present invention is further directed to a process for producing a polymer composition as described herein.
The composition according to the invention can be produced by the methods known to the skilled person, for example mixing the components in a kneader and following extrusion.

*Article & Use*

The present invention is also directed to an article, preferably a wire or cable, comprising the polymer composition as described herein or obtained by the process as described herein.
Thus, according to another aspect, the present invention relates to a wire or cable comprising at least one layer comprising the polymer composition in accordance with the present invention.
According to a preferred embodiment of the present invention said at least one layer obtained from the polyolefin composition of the present invention may be cross-linked.
Further, the wire or cable according to the present invention may also comprise layers, in particular one or more jacketing layer(s), in addition to said at least one layer.
The article, preferably a wire or cable as described above, may be produced by (co-)extrusion of one or more different layers onto the conducting core. In an optional subsequent step, crosslinking is performed, preferably by moisture curing of the crosslinkable silane group, wherein the silane groups are hydrolyzed under the influence of water or steam. Moisture curing is preferably performed in a sauna or water bath at temperatures of 70 to 100°C or at ambient conditions.
Moreover, the polymer composition in accordance with the present invention may be extruded around a wire or cable to form an insulating or jacketing layer or can be used as bedding compounds. Optionally, the polymer compositions are crosslinked after extrusion.
According to a preferred embodiment the wire or cable comprises an insulation layer, preferably comprising or consisting of a material selected from the group consisting of crosslinked or thermoplastic polyethylene, thermoplastic polypropylene or flame retardant polyolefins. Suitable flame retardant polyolefins are inter alia described in WO 2013/159942 A2. Suited thermoplastic insulations are for example disclosed in WO 2007/137711 A1 or WO 2013/1599442 A2 and are commercially available for example from Borealis AG (Austria) under the tradenames FR4802, FR4803, FR4807, FR6082, FR6083 and FR4804. Commercially available crosslinkable insulation materials are also avaialbe from Borealis AG (Austria) under the tradenames FR4850 and FR4851.
An insulation layer of a low voltage power cable may have a thickness in the range of 0.4 mm to 3.0 mm, preferably below 2.0 mm, depending on the application. Preferably, the insulation is directly coated onto the electric conductor.
All preferred aspects and embodiments as described above shall also hold for the wire or cable according to the present invention.
Finally, the present invention is further directed to the use of zirconium phosphate in a polymer composition comprising magnesium hydroxide to improve flame-retardancy.
Unless otherwise indicated and throughout the entire document, it may be assumed that any amount given in "%" relate to "wt.%", that is "% by weight based on the total weight of the polymer composition".

## EXAMPLES

Measurement methods

*Density*

The density was measured according to ISO 1183-1 - method A (2019). Sample preparation was done by compression moulding in accordance with ISO 1872-2:2007.

*Melt Flow Rate (MFR)*

The MFR ($MFR_2$) was measured according to ISO 1133. MFR values were measured at a load of 2.16 kg ($MFR_2$) at 190°C.

*Comonomer content in component (A)*

The content (wt.% and mol%) of polar comonomer present in the polymer and the content (wt.% and mol%) of silane group(s) containing units present in the polymer composition was determined by quantitative nuclear-magnetic resonance (NMR) spectroscopy.

Quantitative 1H NMR spectra recorded in the solution-state using a Bruker Advance III 400 NMR spectrometer operating at 400.15 MHz. All spectra were recorded using a standard broad-band inverse 5 mm probehead at 100°C using nitrogen gas for all pneumatics. Approximately 200 mg of material was dissolved in 1,2-tetrachloroethane-d2 (TCE-d2) using ditertiarybutylhydroxytoluen (BHT) (CAS 128-37-0) as stabiliser. Standard single-pulse excitation was employed utilising a 30-degree pulse, a relaxation delay of 3 s and no sample rotation. A total of 16 transients were acquired per spectra using 2 dummy scans. A total of 32k data points were collected per FID with a dwell time of 60 μs, which corresponded to a spectral window of approx. 20 ppm. The FID was then zero filled to 64k data points and an exponential window function applied with 0.3 Hz line-broadening. This setup was chosen primarily for the ability to resolve the quantitative signals resulting from methylacrylate and vinyltrimethylsiloxane copolymerization when present in the same polymer.

Quantitative 1H NMR spectra were processed, integrated and quantitative properties determined using custom spectral analysis automation programs. All chemical shifts were internally referenced to the residual protonated solvent signal at 5.95 ppm.

When present, characteristic signals resulting from the incorporation of vinyl acetate (VA), methyl acrylate (MA), butyl acrylate (BA) and vinyltrimethylsiloxane (VTMS), in various comonomer sequences, were observed (Randell89). All comonomer contents calculated with respect to all other monomers present in the polymer.

The vinyl acetate (VA) incorporation was quantified using the integral of the signal at 4.84 ppm assigned to the *VA sites, accounting for the number of reporting nuclei per comonomer and correcting for the overlap of the OH protons from BHT when present:

$$VA = ( I_{*VA} - (I_{ArBHT})/2 ) / 1$$

The methyl acrylate (MA) incorporation was quantified using the integral of the signal at 3.65 ppm assigned to the 1MA sites, accounting for the number of reporting nuclei per comonomer:

$$MA = I_{1MA} / 3$$

The butyl acrylate (BA) incorporation was quantified using the integral of the signal at 4.08 ppm assigned to the 4BA sites, accounting for the number of reporting nuclei per comonomer:

$$BA = I_{4BA} / 2$$

The vinyl trimethylsiloxane incorporation was quantified using the integral of the signal at 3.56 ppm assigned to the 1VTMS sites, accounting for the number of reporting nuclei per comonomer:

$$VTMS = I_{1VTMS} / 9$$

Characteristic signals resulting from the additional use of BHT as stabiliser, were observed. The BHT content was quantified using the integral of the signal at 6.93 ppm assigned to the ArBHT sites, accounting for the number of reporting nuclei per molecule:

$$BHT = I_{ArBHT} / 2$$

The ethylene comonomer content was quantified using the integral of the bulk aliphatic (bulk) signal between 0.00 - 3.00 ppm. This integral may include the 1VA (3) and αVA (2) sites from isolated vinyl acetate incorporation, *MA and αMA sites from isolated methyl acrylate incorporation, 1BA (3), 2BA (2), 3BA (2), *BA (1) and αBA (2) sites from isolated butyl acrylate incorporation, the *VTMS and αVTMS sites from isolated vinylsilane incorporation and the aliphatic sites from BHT as well as the sites from polyethylene sequences. The total ethylene comonomer content was calculated based on the bulk integral and compensating for the observed comonomer sequences and BHT:

$$E = (1/4)*[ I_{bulk} - 5*VA - 3*MA - 10*BA - 3*VTMS - 21*BHT ]$$

It should be noted that half of the $\alpha$ signals in the bulk signal represent ethylene and not comonomer and that an insignificant error is introduced due to the inability to compensate for the two saturated chain ends (S) without associated branch sites.

The total mole fractions of a given monomer (M) in the polymer was calculated as:

$$fM = M / ( E + VA + MA + BA + VTMS )$$

The total comonomer incorporation of a given monomer (M) in mole percent was calculated from the mole fractions in the standard manner:

$$M [mol\%] = 100 * fM$$

The total comonomer incorporation of a given monomer (M) in weight percent was calculated from the mole fractions and molecular weight of the monomer (MW) in the standard manner:

M [wt. %] = 100 * (fM * MV) / (fVA * 86.09) + (fMA *86.09) + (fBA * 128.17) + (fVTMS * 148.23) + ((1-fVA-fMA-fBA-fVTMS) * 28.05) )

randall89: J. Randall, Macromol. Sci., Rev. Macromol. Chem. Phys. 1989, C29, 201.

If characteristic signals from other specific chemical species are observed the logic of quantification and/or compensation can be extended in a similar manor to that used for the specifically described chemical species. That is, identification of characteristic signals, quantification by integration of a specific signal or signals, scaling for the number of reported nuclei and compensation in the bulk integral and related calculations. Although this process is specific to the specific chemical species in question the approach is based on the basic principles of quantitative NMR spectroscopy of polymers and thus can be implemented by a person skilled in the art as needed.

*Melting temperature*

Melting temperature, $T_m$, was measured with a TA Instrument Q200 differential scanning calorimetry (DCS) on 5 to 7 mg samples. DSC is run according to IDO 11357/ part 3/ method C2 in heat/ cool/ heat cycle with a scan rate of 10°C/min in the temperature range of -30 to +225°C. Melting temperature ($T_m$) is determined from the second heating step.

*BET surface*

The BET surface/ specific surface area was determined in accordance with ISO 9277 (2010).

*Manufacturing of tape used for determination of tensile strength and elongation at break*

For determining the tensile strength and elongation at break, tapes (1.8 mm) were produced on a Collin TeachLine E20T tape extruder with a 4.2:1, 20D compression screw with a 20 mm diameter. The temperature profile was 120/140/150/160°C and the screw speed was 55 rpm.

*Tensile Testing*

Tensile testing was executed in accordance with ISO 527-1 and ISO 527-2 using an Alwetron TCT 10 tensile tester. Ten test specimen were punched from a plaque using ISO 527-2/5A specimen and placed in a climate room with relative humidity of 50 $\pm$ 5 % at a temperature of 23°C for at least 16 hours before the test. The test specimen were placed vertically between clamps with a distance of 50 $\pm$ 2 mm, extensometer clamps with a distance of 20 mm and a load cell of 1 kN. Before the test was carried out, the exact width and thickness for every sample was measured and recorded. Each sample rod was tensile tested with a constant speed of 50 mm/min until breakage and at least 6 approved parallels were performed. In highly filled systems, there is generally a big variation of the results and therefore the median value was used to extract a single value for elongation at break (%) and tensile strength (MPa).

*Flame propagation test*

Test for vertical flame propagation for a single insulated wire or cable, test method. The resistance to flame propagation in cables in vertical position was determined via UL 2556:2021. A burner matching the specification D5025

has been used in an chamber volume of >4m$^3$. The burner is kept for at least 5 minutes to stabilize, then the flame is adjusted to an outer flame of ca. 125 +/-10mm and an inner blue cone to 40 +/- 2 mm when standing upright. The burner is adjusted to have a 20 degree from the normal. The top of the inner blue flame meets the cable 236 mm from the ground. The flame is applied 5 times for 15 sec onto the cable. Each application of the flame is carried out only after the previous ignition has extinguished. Further, a pause of at least 15s is required between each ignition. The test is performed on 1.5 mm$^2$ solid conductor cores with a insulation layer of 0.76 mm thickness. The result of the flame propagation test is given as either pass (P) or fail (F).

Materials

*MDH (component (B)):* Magnsium hydroxide; 95% purity, specific surface area: 3-10 m$^2$/g (Kisuma).

*ZrP (component (C)):* Zirconium phophate; CAS 13772-29-7, apparent density (indicated by supplier): 1.6 g/cm$^3$, alpha $Zr(HPO_4)_2{*}H_2O$ (sunshine, company resin & zircon Technology; China).

*Component (D):*

*Polymer D1:* LLDPE grafted with MAH (maleic anhydride), $MFR_2$: 0.6 g/10min, density: 0.92 g/cm$^3$, melting point: 120°C, MAH content: 0.5-1.0 wt.% (Hyundai).

*Polymer D2:* LLDPE grafted with MAH, density: 0.3 g/cm$^3$, melting point: 120°C, MAH content: 0.5-1 wt.% (DOW).

*HDTMS (component (E)):* Hexadecyltrimethoxysilane.

*Component (F):* Additive package, comprising: 0.3 wt.% antioxidant, 0.1 wt. % metal deactivator and 0.3 wt. % light stabilizer.

*ATH:* Aluminium hydroxide; Apyral 40H1, $Al(OH)_3$ 98.5%, BET 4 m$^2$/g, nonreactive surface treatment, density 2.4 g/cm$^3$ (Huber).

*Preparation of "Si-copolymer 1" (component (A1)) a copolymer of ethylene with methyl acrylate comonomer and with vinyl trimethoxy silane comonomer*

The copolymer of ethylene with methyl acrylate comonomer and vinyl trimethoxy silane comonomer (polymer 1) was produced in a commercial high pressure tubular reactor at a pressure 2500-3000 bar and max temperature 250-300°C using conventional peroxide initiator. Ethylene monomer, methyl acrylate (MA) polar comonomer and vinyl trimethoxy silane (VTMS) comonomer were added to the reactor system in a conventional manner. Chain transfer agent was used to regulate melt flow rate as well known for a skilled person. After having the information of the property balance desired for the final polymer 1, the skilled person can control the process to obtain polymer 1.

The amount of the vinyl trimethoxy silane units, VTMS, the amount of methyl acrylate, MA, and $MFR_2$ are given in below Table 1.

The properties in Table 1 were measured from the polymer as obtained from the reactor.

**Table 1:** Product properties of Si-copolymer 1.

| Properties of the polymer obtained from the reactor | Si-copolymer 1 |
|---|---|
| $MFR_{2,16}$, g/10 min | 3.5 |
| Methyl acrylate content, mol% (wt.%) | 8.6 (22.5) |
| Melt Temperature, °C | 90 |
| VTMS content, mol% (wt.%) | 0.27 (1.4) |
| Density, kg/m$^3$ | 946 |

In above Table 1 and below MA content denotes the content of Methyl Acrylate comonomer present in the polymer and, respectively, VTMS content denotes the content of vinyl trimethoxy silane comonomer present in the polymer.

*Preparation of exemplary polymer compositions*

The compositions of IE1a, IE1b, IE1c, IE2 and CE1 to CE6 were produced by a batch-wise 5 L kneader from Myungshin Engineering. The chamber had two counter rotating rotors and the raw materials were compounded by heating

the chamber and rotors to 135°C, adding all raw materials and knead the sample until the inside of the chamber reached 150°C. After kneading the sample was extruded in a single screw extruder with 3 temperature zones setpoint 140°C, 150°C and 150°C and pelletized. The amounts of the different components in the polymer compositions and the properties of the polymer compositions according to the inventive examples and the comparative examples can be gathered from Table 2.

**Table 2:** Exemplary compositions and properties (*P = pass, F = fail).

| | IE1a | IE1b | IE1c | IE2 | CE1 | CE2 | CE3 | CE4 | CE5 | CE6 |
|---|---|---|---|---|---|---|---|---|---|---|
| Si-copolymer 1 (A1) | 23.25 | 27.25 | 28.75 | 31.75 | 24.25 | 31.75 | 24.25 | 23.25 | 29.75 | 29.00 |
| ATH | | | | | | | 70 | 70 | 64 | 64 |
| MDH (B) | 70 | 65 | 65 | 62 | 70 | 64 | | | | |
| Polymer D1 (D) | 4 | 4 | 4 | | 4 | | 4 | 4 | | |
| Polymer D2 (D) | | | | 2.5 | | 2.5 | | | 2.5 | 4 |
| HDTMS (E) | 1 | 1 | 1 | 1 | 1 | 1 | 1 | 1 | 1 | 1 |
| ZrP (C) | 1 | 2 | 0.5 | 2 | | | | 1 | 2 | 2 |
| Additives (F) | 0.75 | 0.75 | 0.75 | 0.75 | 0.75 | 0.75 | 0.75 | 0.75 | 0.75 | 0.75 |
| Tensile strength [MPa] | 11.4 | 10.0 | 11.0 | 10.1 | 11.0 | 10.0 | 10.3 | 10.5 | 8.0 | 9.0 |
| Elongation at break [%] | 112 | 131 | 114 | 184 | 92 | 175 | 88 | 71 | 137 | 127 |
| Flame propagation* | P | P | P | P | F | F | F | F | F | F |

As can be seen from the above inventive and comparative examples, the addition of zirconium phosphate to flame retardant polymer compositions allows for a reduction of the filler, in particular the MDH, content can be reduced without negatively affecting flame retardancy. This effect is not observed for flame retardant polymer compositions comprising ATH as the filler. Overall, it is immediately evident from the experiments that zirconium phosphate serves as a booster for flame retardant performance of polymer compositions, in particular of silane crosslinked polyolefin compositions comprising MDH as a main filler.

## Claims

**1.** A polymer composition comprising:

(A) a cross-linkable olefin copolymer containing hydrolysable silane groups,
(B) magnesium hydroxide, and
(C) zirconium phosphate.

**2.** The polymer composition according to claim 1, further comprising a second olefin homo- or copolymer (D).

**3.** The polymer composition according to anyone of the preceding claims, wherein said cross-linkable olefin copolymer (A) comprises at least one alpha-olefin monomer, a comonomer comprising a polar group and a comonomer comprising an unsaturated silane compound; preferably wherein said comonomer comprising a polar group is selected from acrylate and methacrylate comonomers; more preferably wherein said cross-linkable olefin copolymer (A) comprises a copolymer of ethylene, methyl acrylate and vinyltrimethoxysilane.

**4.** The polymer composition according to anyone of the preceding claims, wherein the composition further comprises a hydrolysable silane compound (E).

**5.** The polymer composition according to anyone of the preceding claims, wherein the composition further comprises additives (F).

**6.** The polymer composition according to anyone of the preceding claims, wherein said cross-linkable olefin copolymer (A) is a non-grafted copolymer.

**7.** The polymer composition according to anyone of claims 2 to 6, wherein said second olefin homo- or copolymer (D) comprises a grafted polyethylene; preferably a polyethylene grafted with a comonomer comprising a polar group and more preferably a polyethylene grafted with maleic anhydride.

**8.** The polymer composition according to anyone of the preceding claims, comprising:

from 10.0 to 85.0 wt.%, preferably from 20.0 to 75.0 wt.%, more preferably from 20.0 to 40.0 wt.% of a cross-linkable olefin copolymer containing hydrolysable silane groups (A),
from 10.0 to 75.0 wt.%, preferably from 20.0 to 70.0 wt.%, more preferably from 40.0 to 68.0 wt.% of a metal hydroxide (B), a
from 0.1 to 15.0 wt. %, preferably from 0.2 to 10.0 wt.%, more preferably from more than 1.0 to 5.0 wt.% of zirconium phosphate (C);
wherein wt.% are calculated based on the total weight of the polymer composition.

**9.** The polymer composition according to claim 8, further comprising from 0.1 to 10 wt.%, preferably from 0.5 to 8 wt.%, more preferably from 1 to 5 wt. % of a second olefin copolymer (D).

**10.** The polymer composition according to claim 8 or 9, further comprising from 0.1 to 3.0 wt. %, preferably from 0.2 to 2.0 wt.%, more preferably from 0.5 to 2.0 wt. % of a hydrolysable silane compound (E).

**11.** The polymer composition according to anyone of claims 8 to 10 further comprising from 0.1 to 3 wt.%, preferably from 0.2 to 2 wt.%, more preferably from 0.5 to 1.5 wt.% of additives (F).

**12.** The polymer composition according to anyone of claims 2 to 7, wherein the polymer composition consists of:

(A) a cross-linkable olefin copolymer containing hydrolysable silane groups,
(B) magnesium hydroxide,
(C) zirconium phosphate,
(D) optionally, a second olefin homo- or copolymer,
(E) optionally, a hydrolysable silane compound,
(F) optionally, additives; and

wherein a total amount of additives (F) is in a range of from 0 to 3 wt. % based on the total weight of the polymer composition.

**13.** A process for producing a polymer composition according to anyone of claims 1 to 12.

**14.** An article, preferably a wire or cable, comprising a polymer composition according to anyone of claims 1 to 12 or obtained by a process according to claim 13.

**15.** Use of zirconium phosphate in a polymer composition comprising magnesium hydroxide to improve flame-retardancy.

## Patentansprüche

**1.** Polymerzusammensetzung, umfassend:

(A) ein vernetzbares Olefincopolymer, das hydrolysierbare Silangruppen enthält,
(B) Magnesiumhydroxid, und
(C) Zirkoniumphosphat.

**2.** Polymerzusammensetzung nach Anspruch 1, ferner umfassend ein zweites Olefinhomo- oder -copolymer (D).

**3.** Polymerzusammensetzung nach einem der vorhergehenden Ansprüche, wobei das vernetzbare Olefincopolymer (A) mindestens ein alpha-Olefinmonomer, ein Comonomer, das eine polare Gruppe umfasst, und ein Comonomer, das eine ungesättigte Silanverbindung umfasst, umfasst; vorzugsweise wobei das Comonomer, das eine polare Gruppe umfasst, ausgewählt ist aus Acrylat- und Methacrylat-Comonomeren; besonders vorzugsweise wobei das vernetzbare Olefincopolymer (A) ein Copolymer von Ethylen, Methylacrylat und Vinyltrimethoxysilan umfasst.

4. Polymerzusammensetzung nach einem der vorhergehenden Ansprüche, wobei die Zusammensetzung ferner eine hydrolysierbare Silanverbindung (E) umfasst.

5. Polymerzusammensetzung nach einem der vorhergehenden Ansprüche, wobei die Zusammensetzung ferner Additive (F) umfasst.

6. Polymerzusammensetzung nach einem der vorhergehenden Ansprüche, wobei das vernetzbare Olefincopolymer (A) ein nicht-gepfropftes Copolymer ist.

7. Polymerzusammensetzung nach einem der Ansprüche 2 bis 6, wobei das zweite Olefinhomo- oder -copolymer (D) ein gepfropftes Polyethylen umfasst; vorzugsweise ein Polyethylen, das mit einem Comonomer gepfropft ist, das eine polare Gruppe umfasst, und besonders vorzugsweise ein Polyethylen, das mit Maleinsäureanhydrid gepfropft ist.

8. Polymerzusammensetzung nach einem der vorhergehenden Ansprüche, umfassend:

von 10,0 bis 85,0 Gew.-%, vorzugsweise von 20,0 bis 75,0 Gew.-%, besonders vorzugsweise von 20,0 bis 40,0 Gew.-%, eines vernetzbaren Olefincopolymers, das hydrolysierbare Silangruppen (A) enthält,
von 10,0 bis 75,0 Gew.-%, vorzugsweise von 20,0 bis 70,0 Gew.-%, besonders vorzugsweise von 40,0 bis 68,0 Gew.-%, eines Metallhydroxids (B),
von 0,1 bis 15,0 Gew.-%, vorzugsweise von 0,2 bis 10,0 Gew.-%, besonders vorzugsweise von mehr als 1,0 bis 5,0 Gew.-%, Zirkoniumphosphat (C);
wobei Gew.-% basierend auf dem Gesamtgewicht der Polymerzusammensetzung berechnet sind.

9. Polymerzusammensetzung nach Anspruch 8, ferner umfassend von 0,1 bis 10 Gew.-%, vorzugsweise von 0,5 bis 8 Gew.-%, besonders vorzugsweise von 1 bis 5 Gew.-%, eines zweiten Olefincopolymers (D).

10. Polymerzusammensetzung nach Anspruch 8 oder 9, ferner umfassend von 0,1 bis 3,0 Gew.-%, vorzugsweise von 0,2 bis 2,0 Gew.-%, besonders vorzugsweise von 0,5 bis 2,0 Gew.-%, einer hydrolysierbaren Silanverbindung (E).

11. Polymerzusammensetzung nach einem der Ansprüche 8 bis 10, ferner umfassend von 0,1 bis 3 Gew.-%, vorzugsweise von 0,2 bis 2 Gew.-%, besonders vorzugsweise von 0,5 bis 1,5 Gew.-%, Additive (F).

12. Polymerzusammensetzung nach einem der Ansprüche 2 bis 7, wobei die Polymerzusammensetzung besteht aus:

(A) einem vernetzbaren Olefincopolymer, das hydrolysierbare Silangruppen enthält,
(B) Magnesiumhydroxid,
(C) Zirkoniumphosphat,
(D) optional einem zweiten Olefinhomo- oder -copolymer,
(E) optional einer hydrolysierbaren Silanverbindung,
(F) optional Additiven; und

wobei eine Gesamtmenge von Additiven (F) in einem Bereich von 0 bis 3 Gew.-% liegt, basierend auf dem Gesamtgewicht der Polymerzusammensetzung.

13. Verfahren zum Herstellen einer Polymerzusammensetzung nach einem der Ansprüche 1 bis 12.

14. Artikel, vorzugsweise ein Draht oder Kabel, umfassend eine Polymerzusammensetzung nach einem der Ansprüche 1 bis 12 oder erhalten durch ein Verfahren nach Anspruch 13.

15. Verwendung von Zirkoniumphosphat in einer Polymerzusammensetzung, die Magnesiumhydroxid umfasst, zum Verbessern der Flammhemmung.

## Revendications

1. Composition de polymère comprenant :

(A) un copolymère d'oléfine réticulable contenant des groupes silane hydrolysables,

(B) de l'hydroxyde de magnésium, et
(C) du phosphate de zirconium.

2. Composition de polymère selon la revendication 1, comprenant en outre un deuxième homo- ou copolymère d'oléfine (D).

3. Composition de polymère selon l'une quelconque des revendications précédentes, dans laquelle ledit copolymère d'oléfine réticulable (A) comprend au moins un monomère alpha-oléfine, un comonomère comprenant un groupe polaire et un comonomère comprenant un composé silane insaturé ; de préférence, dans laquelle ledit comonomère comprenant un groupe polaire est choisi parmi les comonomères acrylates et méthacrylates ; plus préférablement, dans laquelle ledit copolymère d'oléfine réticulable (A) comprend un copolymère d'éthylène, d'acrylate de méthyle et de vinyltriméthoxysilane.

4. Composition de polymère selon l'une quelconque des revendications précédentes, dans laquelle la composition comprend en outre un composé silane hydrolysable (E).

5. Composition de polymère selon l'une quelconque des revendications précédentes, dans laquelle la composition comprend en outre des additifs (F).

6. Composition de polymère selon l'une quelconque des revendications précédentes, dans laquelle ledit copolymère d'oléfine réticulable (A) est un copolymère non greffé.

7. Composition de polymère selon l'une quelconque des revendications 2 à 6, dans laquelle ledit deuxième homo- ou copolymère d'oléfine (D) comprend un polyéthylène greffé ; de préférence, un polyéthylène greffé avec un comonomère comprenant un groupe polaire et, plus préférablement, un polyéthylène greffé avec de l'anhydride maléique.

8. Composition de polymère selon l'une quelconque des revendications précédentes, comprenant :

de 10,0 à 85,0 % en poids, de préférence de 20,0 à 75,0 % en poids, plus préférablement de 20,0 à 40,0 % en poids d'un copolymère d'oléfine réticulable contenant des groupes silane hydrolysables (A),
de 10,0 à 75,0 % en poids, de préférence de 20,0 à 70,0 % en poids, plus préférablement de 40,0 à 68,0 % en poids d'un hydroxyde métallique (B),
de 0,1 à 15,0 % en poids, de préférence de 0,2 à 10,0 % en poids, plus préférablement de plus de 1,0 à 5,0 % en poids de phosphate de zirconium (C) ;
les % en poids étant calculés sur la base du poids total de la composition de polymère.

9. Composition de polymère selon la revendication 8, comprenant en outre de 0,1 à 10 % en poids, de préférence de 0,5 à 8 % en poids, plus préférablement de 1 à 5 % en poids d'un deuxième copolymère d'oléfine (D).

10. Composition de polymère selon la revendication 8 ou 9, comprenant en outre de 0,1 à 3,0 % en poids, de préférence de 0,2 à 2,0 % en poids, plus préférablement de 0,5 à 2,0 % en poids d'un composé silane hydrolysable (E).

11. Composition de polymère selon l'une quelconque des revendications 8 à 10, comprenant en outre de 0,1 à 3 % en poids, de préférence de 0,2 à 2 % en poids, plus préférablement de 0,5 à 1,5 % en poids d'additifs (F).

12. Composition de polymère selon l'une quelconque des revendications 2 à 7, dans laquelle la composition de polymère consiste en :

(A) un copolymère d'oléfine réticulable contenant des groupes silane hydrolysables,
(B) de l'hydroxyde de magnésium,
(C) du phosphate de zirconium,
(D) éventuellement, un deuxième homo- ou copolymère d'oléfine,
(E) éventuellement, un composé silane hydrolysable,
(F) éventuellement, des additifs ; et

dans laquelle une quantité totale d'additifs (F) est dans une plage allant de 0 à 3 % en poids, sur la base du poids total de la composition de polymère.

13. Procédé de production d'une composition de polymère selon l'une quelconque des revendications 1 à 12.

14. Article, de préférence fil ou câble, comprenant une composition de polymère selon l'une quelconque des revendications 1 à 12 ou obtenue par un procédé selon la revendication 13.

15. Utilisation de phosphate de zirconium dans une composition de polymère comprenant de l'hydroxyde de magnésium afin d'améliorer le caractère ignifuge.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018160457 A1
- WO 2023062062 A1
- US 6197864 B1
- US 4413066 A
- US 4297310 A
- US 4351876 A
- US 4397981 A
- US 4446283 A
- US 4456704 A
- US 3646155 A
- US 4117195 A
- US 3236917 A
- US 4639495 A
- US 4950541 A
- US 5194509 A
- WO 2019201934 A1
- EP 0449939 A1
- EP 1254923 A1
- WO 2005003199 A1
- WO 2013159942 A2
- WO 2007137711 A1
- WO 20131599442 A2


### Non-patent literature cited in the description


- *CHEMICAL ABSTRACTS*, 1327-33-9
- *CHEMICAL ABSTRACTS*, 13772-29-7
- *CHEMICAL ABSTRACTS*, 128-37-0
- **J. RANDALL**. *Macromol. Sci., Rev. Macromol. Chem. Phys.*, 1989, vol. C29, 201